(19) 

Europäisches
Patentamt
European
Patent Office
Office européen
des brevets

(11) **EP 4 458 922 A1**

(12) **EUROPEAN PATENT APPLICATION**

(43) Date of publication:
**06.11.2024 Bulletin 2024/45**

(21) Application number: **24173583.6**

(22) Date of filing: **30.04.2024**

(51) International Patent Classification (IPC):
**C09K 5/04** (2006.01)

(52) Cooperative Patent Classification (CPC):
**C09K 5/045;** C09K 2205/106; C09K 2205/122

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.05.2023 KR 20230058372
29.02.2024 KR 20240029329**

(71) Applicants:
• **SK Innovation Co., Ltd.
Seoul 03188 (KR)**

• **SK Enmove Co., Ltd.
Seoul 03188 (KR)**

(72) Inventors:
• **KANG, Bong Ho
34124 Daejeon (KR)**
• **KIM, Hye Ri
34124 Daejeon (KR)**
• **NOH, Ji Seong
34124 Daejeon (KR)**
• **LEE, Jae Min
34124 Daejeon (KR)**

(74) Representative: **Prüfer & Partner mbB
Patentanwälte · Rechtsanwälte
Sohnckestraße 12
81479 München (DE)**

(54) **MIXED REFRIGERANT COMPOSITION AND HEAT PUMP INCLUDING THE SAME**

(57) The mixed refrigerant composition according to exemplary embodiments includes carbon dioxide (R-744), trifluoroiodomethane (R-13I1), and 1,1-difluoroethane (R). -152a), wherein a sum of contents of the trifluoroiodomethane (R-13I1) and the 1,1-difluoroethane (R-152a) based on a total weight of the mixed refrigerant composition may be 60 wt.% or more and less than 100 wt.%. Accordingly, environmental pollution caused by the mixed refrigerant composition may be suppressed, and the cooling performance of the mixed refrigerant composition may be improved.

[FIG. 1]

EP 4 458 922 A1

**Description**

[BACKGROUND OF THE INVENTION]

1. Field of the Invention

The present disclosure relates to a composition containing a refrigerant and a heat pump including the same. More specifically, the present disclosure relates to a composition containing different refrigerants and a heat pump including the same.

2. Description of the Related Art

Refrigerants are substances used to remove heat from heat pumps utilized in air conditioners, refrigerators, cooling towers and the like. The refrigerants may include, for example, natural refrigerants, chlorofluorocarbon (CFC)-based refrigerants, hydrochlorofluorocarbon (HCFC)-based refrigerants, hydrofluorocarbon (HFC)-based refrigerants, and hydrofluoroolefin (HFO)-based refrigerants.

Recently, types of heat pumps used indoors and outdoors have become more diverse, and due to the development of electric vehicles, etc., the miniaturized heat pumps are required. Further, in the case of refrigerants containing chlorine (Cl), they may a cause of ozone layer destruction, etc., such that the development of refrigerants which do not contain chlorine atoms are being tried.

For example, 2,3,3,3-tetrafluoropropene (R-1234yf) which is a type of hydrofluoroolefin-based refrigerant does not contain chlorine atoms. Therefore, this substance is actively used as a refrigerant in an air conditioner for an automobile due to a low global warming potential (GWP).

However, when 2,3,3,3-tetrafluoropropene is used as a refrigerant in the air conditioner, there is a problem that the performance of the air conditioner is decreased due to its low coefficient of performance (COP).

Accordingly, there is a need to develop refrigerants or a combination of refrigerants which have a high coefficient of performance while capable of suppressing environmental pollution.

[SUMMARY OF THE INVENTION]

An object according to exemplary embodiments is to provide a mixed refrigerant composition with improved environmental friendliness.

Another object according to exemplary embodiments is to provide a heat pump which includes the mixed refrigerant composition, and has improved cooling performance and heating performance.

To achieve the above objects, according to an aspect of the present disclosure, there is provided a mixed refrigerant composition including carbon dioxide (R-744), trifluoroiodomethane (R-13I1), and 1,1-difluoroethane (R-152a), wherein a sum of a content of the trifluoroiodomethane (R-13I1) and a content of the 1,1-difluoroethane (R-152a) based on a total weight of the mixed refrigerant composition is 60% by weight or more and less than 100% by weight.

In some embodiments, the sum of a content of the trifluoroiodomethane (R-13I1) and a content of the 1,1-difluoroethane (R-152a) based on a total weight of the mixed refrigerant composition is 60 to 98 % by weight, or 85 to 98 % by weight.

In some embodiments, the content of the carbon dioxide (R-744) based on the total weight of the mixed refrigerant composition may be greater than 0% by weight and 40% by weight or less or 0.5 % by weight or more and less than 20 % by weight, or 0.5 to 10 % by weight, or 0.5 to 5 % by weight..

In some embodiments, the content of the trifluoroiodomethane (R-13I1) based on the total weight of the mixed refrigerant composition may be 35 to 80% by weight, or 45 to 74.5 % by weight, or 55 to 71.5 % by weight.

In some embodiments, the content of the 1,1-difluoroethane (R-152a) based on the total weight of the mixed refrigerant composition may be 5 to 60 % by weight, or 20 to 60% by weight.

In some embodiments, the content of the 1,1-difluoroethane (R-152a) based on the total weight of the mixed refrigerant composition may be 30 to 50% by weight.

In some embodiments, the content of the 1,1-difluoroethane (R-152a) based on the total weight of the mixed refrigerant composition may be 20 to 40% by weight.

In some embodiments, the content of the 1,1-difluoroethane (R-152a) based on the total weight of the mixed refrigerant composition may be 40 to 60% by weight.

In some embodiments, a ratio of the content of the trifluoroiodomethane (R-13I1) to the content of the carbon dioxide (R-744) based on the total weight of the mixed refrigerant composition may be 5 to 80, or 10 to 79.

In some embodiments, a ratio of the content of the carbon dioxide (R-744) to the content of the 1,1-difluoroethane (R-152a) based on the total weight of the mixed refrigerant composition may be 0.01 to 0.3, or 0.02 to 0.2.

In some embodiments, a ratio of the content of the trifluoroiodomethane (R-13I1) to the content of the 1,1-difluoroethane (R-152a) based on the total weight of the mixed refrigerant composition may be 0.5 to 4, or 1 to 3.95.

In some embodiments, a boiling point of the mixed refrigerant composition at 1 atm may be -70 to -30 °C, -60 to -34 °C, or -50 to -33 °C.

In some embodiments, a critical temperature of the mixed refrigerant composition may be 105 to 120°C, or 106 to 120°C.

In some embodiments, the critical pressure of the mixed refrigerant composition may be 40 to 50 bar, or 40 to 48.5 bar.

In some embodiments, a temperature glide of the mixed refrigerant composition at a pressure of 1.5 bar may be 5 to 40 °C, or 5 to 30 °C.

In some embodiments, a temperature glide of the mixed refrigerant composition at a pressure of 15 bar may be 3 to 30° C or 3 to 25 °C.

In some embodiments, a latent heat of the mixed refrigerant composition at -25 °C may be 100 to 250 kJ/kg, or 150 to 250 kJ/kg.

In some embodiments, a global warming potential (GWP) of the mixed refrigerant composition may be 1 to 75, or 20 to 75.

According to another aspect of the present disclosure, there is provided a heat pump including the above-described mixed refrigerant composition.

The mixed refrigerant composition according to exemplary embodiments includes carbon dioxide (R-744), trifluoroiodomethane (R-13I1), and 1,1-difluoroethane (R-152a). Accordingly, the refrigerant included in the mixed refrigerant composition may not contain chlorine atoms (Cl), thus environmental pollution such as ozone layer destruction can be suppressed.

The boiling point of the mixed refrigerant composition may be -30 °C or lower. Accordingly, the mixed refrigerant composition may effectively decrease the ambient temperature during vaporization from liquid to gas even at a low temperature.

In addition, the mixed refrigerant composition may have a critical temperature of 105 °C or higher. Thereby, while a cooler such as an air conditioner is operated, the mixed refrigerant composition may not become a supercritical state, such that the condensation pressure of the compressor may not be reduced. Accordingly, the coefficient of performance of a heat pump including the mixed refrigerant composition may be improved.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a schematic view illustrating the flow of a mixed refrigerant for heat exchange in a cooling mode of a heat exchanger according to exemplary embodiments; and

FIG. 2 is a schematic view illustrating the flow of a mixed refrigerant for heat exchange in a heating mode of the heat exchanger according to exemplary embodiments.

[DETAILED DESCRIPTION OF THE INVENTION]

According to exemplary embodiments, a mixed refrigerant composition which includes carbon dioxide (R-744), trifluoroiodomethane (R-13I1) and 1,1-difluoroethane (R-152a), a heat pump including the mixed refrigerant composition are provided.

Hereinafter, embodiments of the present disclosure will be described in more detail with reference to specific experimental examples.

According to exemplary embodiments, the mixed refrigerant composition may be a mixture of refrigerants which do not contain chlorine atoms (Cl). Examples of refrigerants which do not contain chlorine atoms (Cl) may include natural refrigerants, hydrofluorocarbon (HFC)-based refrigerants, and hydrofluoroolefin (HFO)-based refrigerants.

The natural refrigerant is a substance that exists naturally on earth, distinct from the artificial compound. For example, the natural refrigerant may include at least one of ammonia (R-717), carbon dioxide (R-744), propane (R-290), propylene (R-1270) and butane (R-600a).

The hydrofluorocarbon (HFC)-based refrigerant is a refrigerant composed of hydrogen atoms (H), fluorine atoms (F), and carbon atoms (C). The hydrofluorocarbon (HFC)-based refrigerant may include, for example, at least one of difluoromethane (R-32), trifluoroiodomethane (R-13I1), 1,1-difluoroethane (R-152a), pentafluoroethane (R-125), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa) and 1,1,1,3,3-pentafluorobutane (R-365mfc).

The hydrofluoroolefin (HFO)-based refrigerant is a refrigerant composed of hydrogen atoms (H), fluorine atoms (F) and carbon atoms (C), and has at least one double bond between the carbon atoms. The hydrofluoroolefin (HFO)-based refrigerant may include, for example, at least one of 1,1,2-trifluoroethylene (R-1 123), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a) and 1,2,3,3,3-pentafluoropropene (R-1225ye).

In the present disclosure, the mixed refrigerant composition includes carbon dioxide (R-744), trifluoroiodomethane (R-13I1), and 1,1-difluoroethane (R-152a). The carbon dioxide (R-744), the trifluoroiodomethane (R-13I1), and the 1,1-difluoroethane (R-152a) included in the mixed refrigerant composition do not contain chlorine atoms (Cl). In an exemplary embodiment of the present disclosure, the mixed refrigerant composition optionally may consist only of carbon dioxide (R-744), trifluoroiodomethane (R-13I1), and 1,1-difluoroethane (R-152a).

The carbon dioxide (R-744) is a type of the natural refrigerant, and has an ozone depleting potential (ODP) of 0 and a global warming potential (GWP) of 1. In addition, the carbon dioxide (R-744) may not be corrosive, toxic, or explosive. Due to the carbon dioxide (R-744) included in the mixed refrigerant composition, the environmental friendliness and stability of the mixed refrigerant composition may be improved.

The trifluoroiodomethane (R-13I1) is a type of the hydrofluorocarbon (HFC)-based refrigerant, and has an ozone depleting potential (ODP) of 0 and a global warming potential (GWP) of less than 5. In addition, the trifluoroiodomethane (R-13I1) may have high thermal and chemical stabilities. Due to the trifluoroiodomethane (R-13I1) included in the mixed refrigerant composition, the stability of the mixed refrigerant composition may be improved.

The 1,1-difluoroethane (R-152a) is a type of the hydrofluorocarbon (HFC)-based refrigerant, and has an ozone depleting potential (ODP) of 0 and a global warming potential (GWP) of 150 or less. The 1,1-difluoroethane (R-152a) may have a low molecular mass and a low saturated density. Due to the 1,1-difluoroethane (R-152a) included in the mixed refrigerant composition, the environmental friendliness of the mixed refrigerant composition may be improved. In addition, a discharge pressure from a compressor may be low due to the low saturation density. Therefore, a change in the enthalpy at the same pressure may be increased. Accordingly, freezing ability of the mixed refrigerant composition may be improved.

In some embodiments, the mixed refrigerant composition may not be mixed with any refrigerant other than the carbon dioxide (R-744), trifluoroiodomethane (R-13I1) and 1,1-difluoroethane (R-152a). For example, the mixed refrigerant composition may consist only of carbon dioxide (R-744), trifluoroiodomethane (R-13I1) and 1,1-difluoroethane (R-152a). Accordingly, it is possible to prevent the thermal and chemical stabilities of the mixed refrigerant composition from being reduced due to the refrigerant having a low thermal or chemical stability mixed therewith. In addition, it is possible to prevent the condensation temperature of the mixed refrigerant composition from being increased due to the refrigerant having a low evaporating pressure mixed therewith.

In the present disclosure, a sum of a content of the trifluoroiodomethane (R-13I1) and a content of the 1,1-difluoroethane (R-152a) based on a total weight of the mixed refrigerant composition is 60 or more and less than 100% by weight ("wt.%").

When the sum of the content of trifluoroiodomethane (R-13I1) and the content of 1,1-difluoroethane (R-152a) is less than 60 wt.%, thermal and chemical stabilities may be decreased to cause a reduction in the freezing ability. When the sum of the content of trifluoroiodomethane (R-13I1) and the content of 1,1-difluoroethane (R-152a) is 100 wt.%, the global warming potential may be excessively increased to cause a reduction in the environmental friendliness. Within the above content range, the freezing ability and environmental friendliness of the mixed refrigerant composition may be improved together.

In some embodiments, the sum of the content of trifluoroiodomethane (R-13I1) and the content of 1,1-difluoroethane (R-152a) based on the total weight of the mixed refrigerant composition may be 60 to 98 wt.%, 80 to 98 wt.%, or 85 to 98 wt.%. Within the above content range, the thermal and chemical stabilities of the mixed refrigerant composition may be further improved, thereby more improving the refrigeration ability, as well as improving the environmental friendliness.

In some embodiments, the content of carbon dioxide (R-744) based on the total weight of the mixed refrigerant composition may be greater than 0 wt.% and less than 40 wt.%, 0.5 wt.% or more and less than 40 wt.%, and 0.5 to 20 wt.%, 0.5 to 10 wt.%, 0.5 to 5 wt.%, or 4 to 5 wt.%.

Within the above content range of carbon dioxide (R-744), an average global warming potential (GWP) of the mixed refrigerant composition may be decreased. Accordingly, the environmental friendliness of the mixed refrigerant composition may be further improved. In addition, within the above range, heating performance may be improved when an outside air temperature is low due to a low boiling point of the carbon dioxide (R-744).

In some embodiments, the content of the trifluoroiodomethane (R-13I1) based on the total weight of the mixed refrigerant composition may be greater than 0 wt.% and 99 wt.% or less, greater than 0 wt.% and 94.5 wt.% or less, 20 to 89.5 wt.%, 30 to 84.5 wt.%, 35 to 80 wt.%, or 35 to 79.5 wt.%.

Within the above range, the environmental friendliness of the mixed refrigerant composition may be improved due to the low global warming potential of trifluoroiodomethane (R-13I1).

In one embodiment, the content of the trifluoroiodomethane (R-13I1) based on the total weight of the mixed refrigerant composition may be 20 to 80 wt.%, 20 to 74.5 wt.%, and 45 to 74.5 wt.%, 55 to 71.5 wt.%, or 63 to 71.5 wt.%.

Within the content range of the trifluoroiodomethane (R-13I1), the thermal and chemical stabilities of the mixed refrigerant composition may be further improved.

In one embodiment, the content of the trifluoroiodomethane (R-13I1) based on the total weight of the mixed refrigerant composition may be greater than 0 wt.% and 60 wt.% or less, greater than 0 wt.% and 54.5 wt.% or less, 25 to 54.5 wt.%, 35 to 51.5 wt.%, or 43 to 51.5 wt.%. Within the above range, the content of 1,1-difluoroethane (R-152a) may be increased, thereby improving the cooling performance.

In some embodiments, the content of the 1,1-difluoroethane (R-152a) based on the total weight of the mixed refrigerant composition may be 1 to 60 wt.%, 5 to 60 wt.%, and 10 to 60 wt.%, 15 to 60 wt.%, 20 to 60 wt.%, or 30 to 50 wt.%.

In one embodiment, the content of the 1,1-difluoroethane (R-152a) based on the total weight of the mixed refrigerant composition may be 20 to 40 wt.%, 25 to 40 wt.%, or 28 to 40 wt.%. Within the above range, the content of trifluoriodomethane (R-13I1) may be increased, thereby reducing the global warming potential, as well as suppressing an excessive deterioration of the cooling performance. Accordingly, the environmental friendliness and the cooling efficiency of the mixed refrigerant may be improved together.

In one embodiment, the content of the 1,1-difluoroethane (R-152a) based on the total weight of the mixed refrigerant composition may be 40 to 60 wt.%, 45 to 60 wt.%, 45 wt.% to 55 wt.%, 48 to 55 wt.%, or 48 to 52 wt.%. Within the above range, the cooling performance of the mixed refrigerant may be improved through the high latent heat of 1,1-difluoromethane (R-152a), as well as excessive increase in the low global warming potential may be suppressed. Accordingly, the cooling performance and the environmental friendliness of the mixed refrigerant may be improved together.

Within the content range of the 1,1-difluoroethane (R-152a), the freezing ability of the mixed refrigerant composition may be improved. Accordingly, the temperature may be controlled even with a small amount of the mixed refrigerant composition, such that the efficiency of the air conditioner including the mixed refrigerant composition may be improved.

In some embodiments, a ratio of the content of the trifluoroiodomethane (R-13I1) to the content of the carbon dioxide (R-744) based on the total weight of the mixed refrigerant composition may be 5 to 80, 8 to 80, or 9 to 79.

In one embodiment, the ratio of the content of the trifluoroiodomethane (R-13I1) to the content of the carbon dioxide (R-744) based on the total weight of the mixed refrigerant composition may be 10 to 79, 13 to 79, or 14 to 79.

In one embodiment, the ratio of the content of the trifluoroiodomethane (R-13I1) to the content of the carbon dioxide (R-744) based on the total weight of the mixed refrigerant composition may be 9 to 70, 9 to 60, or 9 to 54.

Within the above content ratio range, a high-temperature stability of the mixed refrigerant composition may be improved, while preventing a global warming potential (GWP) value of the mixed refrigerant composition from being increased.

In some embodiments, the ratio of the content of the carbon dioxide (R-744) to the content of the 1,1-difluoroethane (R-152a) based on the total weight of the mixed refrigerant composition may be 0.01 to 0.3, 0.015 to 0.3, or 0.015 to 0.2.

In one embodiment, the ratio of the content of the carbon dioxide (R-744) to the content of the 1,1-difluoroethane (R-152a) based on the total weight of the mixed refrigerant composition may be 0.02 to 0.2, 0.023 to 0.2, or 0.025 to 0.2.

In one embodiment, the ratio of the content of the carbon dioxide (R-744) to the content of the 1,1-difluoroethane (R-152a) based on the total weight of the mixed refrigerant composition may be 0.015 to 0.15, 0.015 to 0.1, or 0.015 to 0.09.

Within the above content ratio range, the refrigeration ability of the mixed refrigerant composition may be improved, while preventing the global warming potential (GWP) value of the mixed refrigerant composition from being increased.

In some embodiments, the ratio of the content of the trifluoroiodomethane (R-13I1) to the content of the 1,1-difluoroethane (R-152a) based on the total weight of the mixed refrigerant composition may be 0.5 to 4, 0.55 to 4, or 0.55 to 3.95.

In one embodiment, the ratio of the content of the trifluoroiodomethane (R-13I1) to the content of the 1,1-difluoromethane (R-152a) based on the total weight of the mixed refrigerant composition may be 1 to 3.95, 1.2 to 3.95, or 1.4 to 3.95.

In one embodiment, the ratio of the content of the trifluoroiodomethane (R-13I1) to the content of the 1,1-difluoromethane (R-152a) based on the total weight of the mixed refrigerant composition may be 0.55 to 3, 0.55 to 2, or 0.55 to 1.2.

Within the above content ratio range, the stability of the mixed refrigerant composition may be improved, as well as the global warming potential (GWP) value may be prevented from being increased.

In some embodiments, the boiling point of the mixed refrigerant composition at 1 atm may be -70 to -30°C, -65 to -30 °C, or -60 to -30°C.

When the boiling point of the mixed refrigerant composition is less than -70 °C, the condensation pressure of the mixed refrigerant composition at the condensation temperature may be increased. Therefore, an energy consumed in a refrigeration cycle may be increased to cause a reduction in the efficiency of the refrigerant.

When the boiling point of the mixed refrigerant composition exceeds -30 °C, a specific volume of the mixed refrigerant composition at the condensation temperature may be increased. Accordingly, a volume of the air conditioner for satisfying the amount of the mixed refrigerant composition required to improve the refrigeration capacity may be increased.

In one embodiment, the boiling point of the mixed refrigerant composition at 1 atm may be -30°C or lower, preferably -70 to -30°C, -60 to -34 °C, or -57.4 to -34.7 °C.

In one embodiment, the boiling point of the mixed refrigerant composition at 1 atm may be -50 to -33 °C, or -49.6 to -32.7 °C.

Within the above boiling point range of the mixed refrigerant composition, the specific volume may be reduced, thereby decreasing the volume of the air conditioner and improving the refrigeration ability of the refrigerant.

In some embodiments, a critical temperature of the mixed refrigerant composition may be 105 or higher, or 105 to 120°C, 105 to 115 °C, 105 to 113 °C, or 106 to 112 °C. The critical temperature refers to a maximum temperature at which a specific substance may exist in a liquid state. If the critical temperature of the refrigerant is low, it may be difficult to liquefy the refrigerant in the refrigeration cycle.

Within the above critical temperature range, the mixed refrigerant composition may not become a supercritical fluid state in the refrigeration cycle. Therefore, it is possible to prevent a portion of the mixed refrigerant composition from not being liquefied, and thus the refrigeration ability may be improved.

In some embodiments, the critical pressure of the mixed refrigerant composition may be 40 to 50 bar, 42 to 50 bar, or 42.5 to 48.5 bar. The critical pressure refers to a maximum pressure at which a specific substance may exist in a liquid state. If the critical pressure of the refrigerant is high, it may be difficult to liquefy the refrigerant in the refrigeration cycle.

Within the above critical pressure range, the mixed refrigerant composition may not become the supercritical fluid state in the refrigeration cycle. Therefore, it is possible to prevent a portion of the mixed refrigerant composition from not being liquefied, and thus the refrigeration ability may be improved.

In some embodiments, a temperature glide (temperature gradient) of the mixed refrigerant composition at a pressure of 1.5 bar may be 5 to 40 °C, 5 to 35 °C, 5 to 30 °C, or 5 to 28 °C.

In some embodiments, the temperature glide of the mixed refrigerant composition at a pressure of 15 bar may be 3 to 30 °C, 3 to 25 °C, or 3 to 20 °C.

Within the above temperature glide range, when using a heat pump with the same volume, capacity thereof may be improved. In addition, within the above temperature glide range, a heat transfer efficiency of the refrigerant may be improved.

In some embodiments, a latent heat at -25 °C may be 100 to 250 kJ/kg, 120 to 250 kJ/kg, or 140 to 250 kJ/kg.

Within the above latent heat range, the heat released or absorbed during the phase change of the mixed refrigerant composition may be sufficient. Accordingly, the thermal efficiency of the mixed refrigerant composition may be improved.

In one embodiment, the latent heat at -25 °C may be 145 to 250 kJ/kg, 145 to 230 kJ/kg, or 145 to 200 kJ/kg.

Within the above latent heat range, the environmental friendliness of the mixed refrigerant composition may be improved, while suppressing a reduction in the thermal efficiency of the mixed refrigerant composition.

In one embodiment, the latent heat at -25 °C may be 100 to 250 kJ/kg, 150 to 250 kJ/kg, 180 to 250 kJ/kg, or 200 to 250 kJ/kg.

Within the above latent heat range, the thermal efficiency of the mixed refrigerant composition may be improved, while suppressing a reduction in the environmental friendliness of the mixed refrigerant composition.

In some embodiments, the global warming potential (GWP) of the mixed refrigerant composition may be 1 to 75, 10 to 75, 15 to 75, or 20 to 75.

The global warming potential (GWP) is a value obtained by calculating a degree of effect on global warming using carbon dioxide ($CO_2$) as a reference material over a certain period of time (for example, 100 years), when 1 kg of any chemical substance is released into the Earth's troposphere. For example, the global warming potential (GWP) of carbon dioxide (R-744) may be 1. For example, the global warming potential (GWP) of trifluoroiodomethane (R-13I1) may be 1. For example, the global warming potential (GWP) of 1,1-difluoroethane (R-152a) may be 124.

Within the above global warming potential range, environmental pollution caused by use and treatment of the mixed refrigerant composition may be suppressed.

In one embodiment, the global warming potential of the mixed refrigerant composition may be 1 to 75, 20 to 75, 20 to 65, or 20 to 55.

Within the above global warming potential range, the global warming potential may be reduced, while suppressing a decrease in the cooling efficiency of the mixed refrigerant composition.

In one embodiment, the global warming potential of the mixed refrigerant composition may be 30 to 75, 40 to 75, or 50 to 75.

Within the above global warming potential range, the cooling efficiency may be improved, while suppressing an excessive increase in the global warming potential.

In some embodiments, the ozone depleting potential (ODP) of the mixed refrigerant composition may be 0.

The ozone depleting potential (ODP) is a value obtained by calculating a degree of effect on ozone layer destruction by any chemical substance, when assuming that the effect of trichlorofluoromethane (CFC-11) on the ozone layer destruction is 1.

As the ozone depleting potential (ODP) is 0, environmental pollution caused by use and treatment of the mixed refrigerant composition may be suppressed.

In some embodiments, the mixed refrigerant composition may have low flammability. For example, the mixed refrigerant composition may have a flammability of Class A2L or lower in the refrigerant safety group classification of The American Society of Heating, Refrigerating and Air-Conditioning Engineers (ASHRAE). Accordingly, stability during operation and leakage of the heat pump may be improved.

According to exemplary embodiments, the heat pump may include the mixed refrigerant composition. Accordingly, the refrigeration performance of the heat pump may be enhanced, while improving the environmental friendliness and stability.

The heat pump may include a compressor, a condenser, an expansion valve, and an evaporator. In the compressor, the above-described mixed refrigerant composition may be compressed to a high temperature and high pressure state, and in the expansion valve, the above-described mixed refrigerant composition may be expanded to a low temperature and low pressure state.

For example, the above-mentioned mixed refrigerant composition may emit or absorb heat while circulating through the compressor, the condenser, the expansion valve, and the evaporator inside the heat pump. The mixed refrigerant composition may be maintained in a gaseous state at high temperature and high pressure in the compressor. The mixed refrigerant composition may be liquefied into a liquid state by releasing the heat in the condenser. The mixed refrigerant composition may be maintained in a low-temperature and low-pressure liquid state, or a mixture state of liquid and gas in the expansion valve. The mixed refrigerant composition may absorb the heat to be vaporized into a gaseous state in the evaporator.

In some embodiments, the heat pump may contain oil. For example, the oil may include polyester (POE), mineral oil, alkylbenzene (AB), polyalkylene glycol (PAG), polyvinyl ether (PVE) and the like.

In some embodiments, a coefficient of performance (COP) of the heat pump may be 1 to 10. The coefficient of performance (COP) refers to a ratio of an amount of heat effectively gained to an amount of work input when operating the heat pump.

A highly efficient heat pump having the coefficient of performance in the above range may be provided using the above-described refrigerant.

Hereinafter, experimental examples including specific examples and comparative examples are proposed to facilitate understanding of the present invention.


**Examples and Comparative Examples**


**(1) Mixed refrigerant composition**


Mixed refrigerant compositions having the components and contents (wt.%) shown in Tables 1 to 5 below were prepared.

The boiling point, critical temperature, critical pressure, temperature glide at 1.5 bar and 15 bar, and latent heat at -25 °C of each of the prepared mixed refrigerant compositions were measured. The measured boiling points, critical temperatures, critical pressure, temperature glides at 1.5 bar and 15 bar, and latent heats at -25 °C of the mixed refrigerant compositions are shown in Tables 1 to 5 below.

The boiling point, critical temperature, critical pressure, temperature glide, and latent heat of the mixed refrigerant composition were measured using REFPROP (Ver 10, NIST).

[TABLE 1]

| Item | Content of each component of mixed refrigerant (wt.%) | | | Boiling point (°C) | Critical temperature (°C) | Critical pressure (bar) | Temperature glide | | Latent heat at -25°C (kJ/kg) |
|---|---|---|---|---|---|---|---|---|---|
| | R-744 | R-1311 | R-152a | | | | 1.5bar (°C) | 15bar (°C) | |
| Example 1 | 1 | 94 | 5 | -42.0 | 117.1 | 42.2 | 16.2 | 9.0 | 116.0 |
| Example 2 | 1 | 89 | 10 | -40.0 | 114.4 | 42.4 | 13.2 | 7.8 | 126.1 |
| Example 3 | 1 | 84 | 15 | -38.6 | 112.5 | 42.6 | 11.0 | 6.6 | 136.5 |
| Example 4 | 1 | 79 | 20 | -37.5 | 111.1 | 42.8 | 9.3 | 5.7 | 147.1 |
| Example 5 | 1 | 74 | 25 | -36.6 | 110.2 | 43.0 | 8.2 | 4.9 | 158.0 |
| Example 6 | 1 | 69 | 30 | -35.9 | 110.7 | 45.0 | 7.3 | 4.3 | 169.0 |
| Example 7 | 1 | 64 | 35 | -35.2 | 110.3 | 44.8 | 6.8 | 3.9 | 180.1 |
| Example 8 | 1 | 59 | 40 | -34.7 | 109.4 | 43.6 | 6.4 | 3.6 | 191.4 |
| Example 9 | 1 | 54 | 45 | -34.1 | 109.4 | 43.9 | 6.1 | 3.3 | 202.8 |
| Example 10 | 1 | 49 | 50 | -33.6 | 109.6 | 44.1 | 5.9 | 3.2 | 214.3 |
| Example 11 | 1 | 44 | 55 | -33.2 | 109.8 | 44.4 | 5.8 | 3.1 | 226.0 |
| Example 12 | 1 | 39 | 60 | -32.7 | 110.1 | 44.6 | 5.6 | 3.0 | 237.6 |
| Example 13 | 1.5 | 93.5 | 5 | -48.4 | 115.9 | 43.1 | 22.1 | 12.8 | 116.8 |
| Example 14 | 1.5 | 88.5 | 10 | -45.6 | 113.4 | 43.3 | 18.2 | 10.9 | 127.0 |
| Example 15 | 1.5 | 83.5 | 15 | -43.5 | 111.6 | 43.4 | 15.4 | 9.3 | 137.4 |
| Example 16 | 1.5 | 78.5 | 20 | -41.9 | 110.4 | 43.5 | 13.3 | 8.1 | 148.1 |
| Example 17 | 1.5 | 73.5 | 25 | -40.7 | 109.6 | 43.7 | 11.7 | 7.1 | 158.9 |
| Example 18 | 1.5 | 68.5 | 30 | -39.6 | 109.1 | 43.8 | 10.7 | 6.3 | 169.9 |
| Example 19 | 1.5 | 63.5 | 35 | -38.7 | 108.9 | 44.0 | 9.9 | 5.8 | 181.1 |
| Example 20 | 1.5 | 58.5 | 40 | -38.0 | 108.9 | 44.3 | 9.3 | 5.4 | 192.5 |

(continued)

| Item | Content of each component of mixed refrigerant (wt.%) | | | Boiling point (°C) | Critical tempera ture (°C) | Critical pressur e (bar) | Temperature glide | | Latent heat at -25°C (kJ/kg) |
|---|---|---|---|---|---|---|---|---|---|
| | R-744 | R-1311 | R-152a | | | | 1.5bar (°C) | 15bar (°C) | |
| Example 21 | 1.5 | 53.5 | 45 | -37.3 | 109.0 | 44.5 | 8.9 | 5.0 | 203.9 |
| Example 22 | 1.5 | 48.5 | 50 | -36.6 | 109.2 | 44.7 | 8.6 | 4.8 | 215.4 |
| Example 23 | 1.5 | 43.5 | 55 | -36.1 | 109.4 | 44.9 | 8.3 | 4.6 | 227.0 |
| Example 24 | 1.5 | 38.5 | 60 | -35.5 | 109.7 | 45.2 | 8.1 | 4.4 | 238.7 |

[TABLE 2]

| Item | Content of each component of mixed refrigerant (wt.%) | | | Boiling point (°C) | Critical tempera ture (°C) | Critical pressur e (bar) | Temperature glide | | Latent heat at -25°C (kJ/kg) |
|---|---|---|---|---|---|---|---|---|---|
| | R-744 | R-1311 | R-152a | | | | 1.5bar (°C) | 15bar (°C) | |
| Example 25 | 2 | 93 | 5 | -53.6 | 114.9 | 44.0 | 26.9 | 16.6 | 117.6 |
| Example 26 | 2 | 88 | 10 | -50.3 | 112.5 | 44.1 | 22.5 | 14.0 | 127.8 |
| Example 27 | 2 | 83 | 15 | -47.8 | 110.8 | 44.1 | 19.2 | 12.0 | 138.3 |
| Example 28 | 2 | 78 | 20 | -45.9 | 109.6 | 44.2 | 16.8 | 10.5 | 149.0 |
| Example 29 | 2 | 73 | 25 | -44.3 | 108.9 | 44.4 | 15.0 | 9.3 | 159.9 |
| Example 30 | 2 | 68 | 30 | -43.0 | 108.5 | 44.5 | 13.7 | 8.4 | 170.9 |
| Example 31 | 2 | 63 | 35 | -42.0 | 108.4 | 44.7 | 12.8 | 7.7 | 182.1 |
| Example 32 | 2 | 58 | 40 | -41.0 | 108.4 | 44.9 | 12.1 | 7.1 | 193.5 |
| Example 33 | 2 | 53 | 45 | -40.2 | 108.6 | 45.1 | 11.5 | 6.7 | 204.9 |
| Example 34 | 2 | 48 | 50 | -39.4 | 108.8 | 45.3 | 11.1 | 6.4 | 216.5 |
| Example 35 | 2 | 43 | 55 | -38.7 | 109.1 | 45.5 | 10.7 | 6.1 | 228.1 |
| Example 36 | 2 | 38 | 60 | -38.1 | 109.4 | 45.7 | 10.4 | 5.9 | 239.8 |

(continued)

| Item | Content of each component of mixed refrigerant (wt.%) | | | Boiling point (°C) | Critical temperature (°C) | Critical pressure (bar) | Temperature glide | | Latent heat at -25°C (kJ/kg) |
|---|---|---|---|---|---|---|---|---|---|
| | R-744 | R-1311 | R-152a | | | | 1.5bar (°C) | 15bar (°C) | |
| Example 37 | 2.5 | 92.5 | 5 | -57.8 | 113.8 | 44.9 | 30.9 | 20.2 | 118.4 |
| Example 38 | 2.5 | 87.5 | 10 | -54.2 | 111.5 | 44.9 | 26.2 | 17.1 | 128.7 |
| Example 39 | 2.5 | 82.5 | 15 | -51.5 | 110.0 | 44.9 | 22.6 | 14.7 | 139.2 |
| Example 40 | 2.5 | 77.5 | 20 | -49.3 | 108.9 | 45.0 | 19.9 | 12.8 | 149.9 |
| Example 41 | 2.5 | 72.5 | 25 | -47.6 | 108.3 | 45.1 | 18.0 | 11.4 | 160.8 |
| Example 42 | 2.5 | 67.5 | 30 | -46.1 | 108.0 | 45.2 | 16.5 | 10.4 | 171.9 |
| Example 43 | 2.5 | 62.5 | 35 | -44.9 | 107.9 | 45.3 | 15.4 | 9.5 | 183.2 |
| Example 44 | 2.5 | 57.5 | 40 | -43.8 | 108.0 | 45.5 | 14.6 | 8.9 | 194.5 |
| Example 45 | 2.5 | 52.5 | 45 | -42.9 | 108.2 | 45.7 | 13.9 | 8.4 | 206.0 |
| Example 46 | 2.5 | 47.5 | 50 | -42.0 | 108.4 | 45.9 | 13.4 | 8.0 | 217.6 |
| Example 47 | 2.5 | 42.5 | 55 | -41.2 | 108.8 | 46.1 | 13.0 | 7.7 | 229.2 |
| Example 48 | 2.5 | 37.5 | 60 | -40.5 | 109.1 | 46.3 | 12.6 | 7.4 | 240.9 |

[TABLE 3]

| Item | Content of each component of mixed refrigerant (wt.%) | | | Boiling point (°C) | Critical temperature (°C) | Critical pressure (bar) | Temperature glide | | Latent heat at -25°C (kJ/kg) |
|---|---|---|---|---|---|---|---|---|---|
| | R-744 | R-1311 | R-152a | | | | 1.5bar (°C) | 15bar (°C) | |
| Example 49 | 3 | 92 | 5 | -61.3 | 112.8 | 45.8 | 34.1 | 23.6 | 119.2 |
| Example 50 | 3 | 87 | 10 | -57.6 | 110.6 | 45.7 | 29.3 | 20.0 | 129.5 |
| Example 51 | 3 | 82 | 15 | -54.7 | 109.2 | 45.7 | 25.5 | 17.2 | 140.1 |
| Example 52 | 3 | 77 | 20 | -52.4 | 108.3 | 45.7 | 22.7 | 15.1 | 150.8 |

(continued)

| Item | Content of each component of mixed refrigerant (wt.%) | | | Boiling point (°C) | Critical temperature (°C) | Critical pressure (bar) | Temperature glide | | Latent heat at -25°C (kJ/kg) |
|---|---|---|---|---|---|---|---|---|---|
| | R-744 | R-1311 | R-152a | | | | 1.5bar (°C) | 15bar (°C) | |
| Example 53 | 3 | 72 | 25 | -50.5 | 107.7 | 45.8 | 20.6 | 13.5 | 161.8 |
| Example 54 | 3 | 67 | 30 | -48.9 | 107.5 | 45.9 | 19.0 | 12.3 | 172.9 |
| Example 55 | 3 | 62 | 35 | -47.5 | 107.4 | 46.0 | 17.8 | 11.4 | 184.2 |
| Example 56 | 3 | 57 | 40 | -46.4 | 107.5 | 46.2 | 16.9 | 10.6 | 195.6 |
| Example 57 | 3 | 52 | 45 | -45.3 | 107.8 | 46.4 | 16.2 | 10.1 | 207.0 |
| Example 58 | 3 | 47 | 50 | -44.4 | 108.1 | 46.5 | 15.6 | 9.6 | 218.6 |
| Example 59 | 3 | 42 | 55 | -43.5 | 108.4 | 46.7 | 15.0 | 9.2 | 230.3 |
| Example 60 | 3 | 37 | 60 | -42.7 | 108.8 | 46.9 | 14.6 | 8.9 | 242.0 |
| Example 61 | 3.5 | 81.5 | 15 | -57.5 | 108.4 | 46.5 | 28.0 | 19.7 | 141.0 |
| Example 62 | 3.5 | 76.5 | 20 | -55.1 | 107.6 | 46.5 | 25.1 | 17.4 | 151.8 |
| Example 63 | 3.5 | 71.5 | 25 | -53.1 | 107.1 | 46.5 | 22.9 | 15.6 | 162.7 |
| Example 64 | 3.5 | 66.5 | 30 | -51.4 | 107.0 | 46.6 | 21.2 | 14.2 | 173.9 |
| Example 65 | 3.5 | 61.5 | 35 | -49.9 | 107.0 | 46.7 | 20.0 | 13.2 | 185.2 |
| Example 66 | 3.5 | 56.5 | 40 | -48.7 | 107.1 | 46.8 | 19.0 | 12.3 | 196.6 |
| Example 67 | 3.5 | 51.5 | 45 | -47.6 | 107.4 | 47.0 | 18.2 | 11.7 | 208.1 |
| Example 68 | 3.5 | 46.5 | 50 | -46.6 | 107.7 | 47.2 | 17.5 | 11.1 | 219.7 |
| Example 69 | 3.5 | 41.5 | 55 | -45.6 | 108.1 | 47.3 | 17.0 | 10.7 | 231.4 |
| Example 70 | 3.5 | 36.5 | 60 | -44.7 | 108.5 | 47.5 | 16.4 | 10.3 | 243.1 |

[TABLE 4]

| Item | Content of each component of mixed refrigerant (wt.%) | | | Boiling point (°C) | Critical temperature (°C) | Critical pressure (bar) | Temperature glide | | Latent heat at -25°C (kJ/kg) |
|---|---|---|---|---|---|---|---|---|---|
| | R-744 | R-13I1 | R-152a | | | | 1.5bar (°C) | 15bar (°C) | |
| Example 71 | 4 | 91 | 5 | -66.6 | 110.8 | 47.6 | 38.9 | 29.7 | 120.8 |
| Example 72 | 4 | 86 | 10 | -62.9 | 108.9 | 47.4 | 34.0 | 25.3 | 131.2 |
| Example 73 | 4 | 81 | 15 | -59.9 | 107.7 | 47.3 | 30.2 | 22.0 | 141.8 |
| Example 74 | 4 | 76 | 20 | -57.4 | 107.0 | 47.2 | 27.2 | 19.5 | 152.7 |
| Example 75 | 4 | 71 | 25 | -55.4 | 106.6 | 47.2 | 25.0 | 17.6 | 163.7 |
| Example 76 | 4 | 66 | 30 | -53.6 | 106.5 | 47.3 | 23.2 | 16.1 | 174.9 |
| Example 77 | 4 | 61 | 35 | -52.1 | 106.5 | 47.4 | 21.9 | 14.9 | 186.2 |
| Example 78 | 4 | 56 | 40 | -50.8 | 106.7 | 47.5 | 20.9 | 14.0 | 197.6 |
| Example 79 | 4 | 51 | 45 | -49.6 | 107.0 | 47.6 | 20.0 | 13.2 | 209.1 |
| Example 80 | 4 | 46 | 50 | -48.5 | 107.4 | 47.8 | 19.3 | 12.6 | 220.8 |
| Example 81 | 4 | 41 | 55 | -47.5 | 107.8 | 47.9 | 18.7 | 12.1 | 232.5 |
| Example 82 | 4 | 36 | 60 | -46.6 | 108.3 | 48.1 | 18.1 | 11.6 | 244.2 |
| Example 83 | 4.5 | 75.5 | 20 | -59.5 | 106.35 | 47.9 | 29.1 | 21.5 | 128.4 |

[TABLE 5]

| Item | Content of each component of mixed refrigerant (wt.%) | | | | Boiling point (°C) | Critical temperature (°C) | Critical pressure (bar) | Temperature glide | | Latent heat at -25°C (kJ/kg) |
|---|---|---|---|---|---|---|---|---|---|---|
| | R-744 | R-13I1 | R-152a | R-1234yf | | | | 1.5bar (°C) | 15bar (°C) | |
| Comparative Example 1 | - | - | - | 100 | -29.7 | 94.7 | 33.8 | 0 | 0 | 177.9 |
| Comparative Example 2 | - | 70 | 30 | - | -27.4 | 110.9 | 41.8 | 0.02 | 0.34 | 166.9 |
| Comparative Example 3 | - | 50 | 50 | - | -27.1 | 110.4 | 42.9 | 0.23 | 0.002 | 212.2 |
| Comparative Example 4 | 50 | 20 | 30 | | -82.3 | 69.53 | 78.28 | 35.2 | 34.9 | 273.1 |

(continued)

| Item | Content of each component of mixed refrigerant (wt.%) | | | | Boiling point (°C) | Critical temperature (°C) | Critical pressure (bar) | Temperature glide | | Latent heat at -25°C (kJ/kg) |
|---|---|---|---|---|---|---|---|---|---|---|
| | R-744 | R-13I1 | R-152a | R-1234yf | | | | 1.5bar (°C) | 15bar (°C) | |
| Comparative Example 5 | 50 | 5 | 45 | | -80.6 | 77.2 | 79.9 | 37.7 | 37.3 | 311.2 |

The specific component described in Tables 1 to 5 are as follows.

R-744: Carbon dioxide

R-13I1: Trifluoroiodomethane

R-152a: 1,1-difluoroethane

R-1234yf: 2,3,3,3-tetrafluoropropene

**Experimental Example 1 - GWP calculation**

Based on the global warming potential (GWP) according to the Intergovernmental Panel on Climate Change (IPCC) of R-744, R-13I1 and R-152a included in the mixed refrigerant composition according to the embodiments, the global warming potentials (GWPs) of the mixed refrigerant compositions were calculated by calculating an arithmetic mean according to the weight ratio of each of R-744, R-13I1 and R-152a.

Specifically, the GWP was calculated with reference to IPCC AR4 and Wiebbles (1995), and the values of R-13I1 and R-744 were calculated as 1, and the value of R-152a was calculated as 124.

The global warming potential (GWP) according to the IPCC was based on the global warming potential (GWP) on the basis of 100 years.

The calculated global warming potentials (GWPs) are shown in Tables 6 to 10 below.

[TABLE 6]

| | Global warming potential (GWP) |
|---|---|
| Example 1 | 7.2 |
| Example 2 | 13.3 |
| Example 3 | 19.5 |
| Example 4 | 25.6 |
| Example 5 | 31.8 |
| Example 6 | 37.9 |
| Example 7 | 44.1 |
| Example 8 | 50.2 |
| Example 9 | 56.4 |
| Example 10 | 62.5 |
| Example 11 | 68.7 |
| Example 12 | 74.8 |
| Example 13 | 7.2 |
| Example 14 | 13.3 |
| Example 15 | 19.5 |
| Example 16 | 25.6 |

(continued)

| | Global warming potential (GWP) |
|---|---|
| Example 17 | 31.8 |
| Example 18 | 37.9 |
| Example 19 | 44.1 |
| Example 20 | 50.2 |
| Example 21 | 56.4 |
| Example 22 | 62.5 |
| Example 23 | 68.7 |
| Example 24 | 74.8 |

[TABLE 7]

| | Global warming potential (GWP) |
|---|---|
| Example 25 | 7.2 |
| Example 26 | 13.3 |
| Example 27 | 19.5 |
| Example 28 | 25.6 |
| Example 29 | 31.8 |
| Example 30 | 37.9 |
| Example 31 | 44.1 |
| Example 32 | 50.2 |
| Example 33 | 56.4 |
| Example 34 | 62.5 |
| Example 35 | 68.7 |
| Example 36 | 74.8 |
| Example 37 | 7.2 |
| Example 38 | 13.3 |
| Example 39 | 19.5 |
| Example 40 | 25.6 |
| Example 41 | 31.8 |
| Example 42 | 37.9 |
| Example 43 | 44.1 |
| Example 44 | 50.2 |
| Example 45 | 56.4 |
| Example 46 | 62.5 |
| Example 47 | 68.7 |
| Example 48 | 74.8 |

[TABLE 8]

|  | Global warming potential (GWP) |
|---|---|
| Example 49 | 7.2 |
| Example 50 | 13.3 |
| Example 51 | 19.5 |
| Example 52 | 25.6 |
| Example 53 | 31.8 |
| Example 54 | 37.9 |
| Example 55 | 44.1 |
| Example 56 | 50.2 |
| Example 57 | 55.8 |
| Example 58 | 62.0 |
| Example 59 | 68.2 |
| Example 60 | 74.4 |
| Example 61 | 19.5 |
| Example 62 | 25.6 |
| Example 63 | 31.8 |
| Example 64 | 37.9 |
| Example 65 | 44.1 |
| Example 66 | 50.2 |
| Example 67 | 55.8 |
| Example 68 | 62.0 |
| Example 69 | 68.2 |
| Example 70 | 74.4 |

[TABLE 9]

|  | Global warming potential (GWP) |
|---|---|
| Example 71 | 7.2 |
| Example 72 | 13.3 |
| Example 73 | 19.5 |
| Example 74 | 25.6 |
| Example 75 | 31.8 |
| Example 76 | 37.9 |
| Example 77 | 44.1 |
| Example 78 | 50.2 |
| Example 79 | 56.4 |
| Example 80 | 62.5 |
| Example 81 | 68.7 |
| Example 82 | 74.8 |
| Example 83 | 25.6 |

[TABLE 10]

|  | Global warming potential (GWP) |
|---|---|
| Comparative Example 1 | 4 |
| Comparative Example 2 | 37.9 |
| Comparative Example 3 | 62.5 |
| Comparative Example 4 | 37.9 |
| Comparative Example 5 | 56.4 |

**Experimental Example 2 - Cooling evaluation**

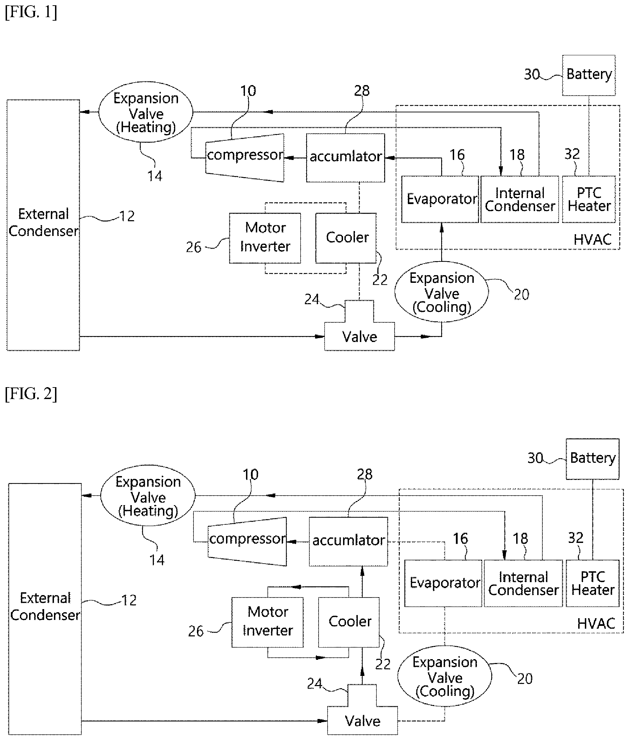

FIG. 1 is a schematic view illustrating the flow of the mixed refrigerant for heat exchange in a cooling mode of the heat exchanger according to exemplary embodiments.

FIG. 2 is a schematic view illustrating the flow of the mixed refrigerant for heat exchange in a heating mode of the heat exchanger according to exemplary embodiments.

The flow of the mixed refrigerant is shown by using directions of the arrows in FIGS. 1 and 2.

Referring to FIG. 1, in the cooling mode, the mixed refrigerant is compressed through a compressor 10, bypasses an internal condenser 18 and an expansion valve (heating) 14 in turn, releases heat in an external condenser 12, then expands in the expansion valve (cooling) 20, and reabsorbs the heat through an evaporator 16.

Referring to FIG. 2, in the heating mode, the mixed refrigerant is compressed through the compressor 10, releases heat in the internal condenser 18, expands in the expansion valve (heating) 14, absorbs heat from in external condenser 12, and then further absorbs the heat through a cooler 22. The process diagram of FIGS. 1 and 2 further shows valve 24 which can route the refrigerant to either the expansion valve (cooling) 20 during the cooling mode or through the cooler 22 during the heating mode. A motor inverter 26 is used for improved energy efficiency by allowing the speed of the cooler system's motor to be adjusted based on the cooling demand. The system also includes an accumulator 28 before the compressor 10 for ensuring that that only refrigerant vapor enters the compressor 10. The system may also include a battery 30 and a PTC heater 32. The battery 30 is used as a primary or back up power source for the various components of the system and may, for example, power the PTC heater for defrosting evaporator coils etc.

Cooling evaluation and heating evaluation were performed using the refrigerant combinations of Examples 52, 62, 74, 76 and 83, and Comparative Example 1 through the above-described heat exchanger at different outside air temperatures. The cooling evaluation was performed by setting the outside air temperature to 45 °C, and the heating evaluation was performed by setting the outside air temperature to -7 °C and -20 °C, respectively. Heating evaluation conditions according to the above examples and comparative examples are described in Table 11 below.

Specifically, outside air temperature (°C), outside air relative humidity (%), compressor rotation speed (RPM), outside air volume ($m^2$/hr), ventilation and air conditioning (HVAC) temperature (°C), HVAC relative humidity (%), HVAC air volume ($m^2$/hr), and refrigerant filling amount (g) are shown in Table 11 below.

The cooling evaluation was verified through GT-SUITE (Gamma Company) which is a 1D analysis program. Specifically, cooling performance (kW), power consumption (kW), and coefficient of performance were evaluated as the cooling evaluation (outside air temperature: 45 °C), and heating performance (kW), power consumption (kW), coefficient of performance, and/or discharge temperature (°C) were evaluated as the heating evaluation (outside air temperature: -7 °C and -20 °C).).

The coefficient of performance was calculated using Equation 1 below.

[Equation 1]

$$\text{Coefficient of performance} = \frac{\text{Cooling performance (or Heating performance)}}{\text{Power consumption}}$$

Evaluation results are shown in Tables 12 to 17 below.

Specifically, evaluation results of the cases, in which 130 g of polyester (POE) was used as the oil, are shown in Tables 12, 14 and 16, and evaluation results of the cases, in which 180 g of RB 100EV (ENEOS) was used as the oil, are shown in Table 13, 15 and 17.

[TABLE 11]

| Item | Refrigerant combinatio n | Outside air temperature (°C) | Outside air relative humidity (%) | Compresso r rotation speed (RPM) | Outside air volume (m$^2$/hr) | HVAC temperatur e (°C) | HVAC relative humidity (%) | HVAC air volume (m$^2$/hr) | Refrigerant filling amount (g) |
|---|---|---|---|---|---|---|---|---|---|
| Experimen tal Example 2-1 | Example 52 | 45 | 45 | 2,500~3,50 0 | 2,712 | 45 | 45 | 572 | 1,400 |
| Experimen tal Example 2-2 | Example 52 | -7 | - | 3,000~8,00 0 | 2,311 | -7 | - | 320 | 1,400 |
| Experimen tal Example 2-3 | Example 52 | -20 | - | 4,000~8,00 0 | 2,712 | -20 | - | 311 | 1,400 |
| Experimen tal Example 2-4 | Example 74 | 45 | 45 | 2,000~4,00 0 | 2,712 | 45 | 45 | 572 | 1,400 |
| Experimen tal Example 2-5 | Example 74 | -7 | - | 3,000~7,00 0 | 2,311 | -7 | - | 320 | 1,400 |
| Experimen tal Example 2-6 | Example 74 | -20 | - | 4,000~7,20 0 | 2,712 | -20 | - | 311 | 1,400 |
| Experimen tal Example 2-7 | Example 76 | 45 | 45 | 2,000~5,00 0 | 2,712 | 45 | 45 | 572 | 1,400 |
| Experimen tal Example 2-8 | Example 76 | -7 | - | 2,000~7,00 0 | 2,311 | -7 | - | 320 | 1,400 |
| Experimen tal Example 2-9 | Example 76 | -20 | - | 2,000~6,00 0 | 2,712 | -20 | - | 311 | 1,400 |
| Experimen tal Example 2-10 | Example 78 | 45 | 45 | 3,000~7,00 0 | 2,712 | 45 | 45 | 572 | 1,400 |
| Experimen tal Example 2-11 | Example 78 | -7 | - | 2,000~6,00 0 | 2,311 | -7 | - | 320 | 1,400 |
| Experimen tal Example 2-12 | Example 78 | -20 | - | 2000~4,00 0 | 2,712 | -20 | - | 311 | 1,400 |
| Experimen tal Example 2-13 | Example 80 | 45 | 45 | 2,000~5,00 0 | 2,712 | 45 | 45 | 572 | 1,200 |

| Item | Refrigerant combinatio n | Outside air temperature (°C) | Outside air relative humidity (%) | Compresso r rotation speed (RPM) | Outside air volume (m2/hr) | HVAC temperatur e (°C) | HVAC relative humidity (%) | HVAC air volume (m2/hr) | Refrigerant filling amount (g) |
|---|---|---|---|---|---|---|---|---|---|
| Experimen tal Example 2-14 | Example 80 | -7 | - | 2,000~7,00 0 | 2,311 | -7 | - | 320 | 1,200 |
| Experimen tal Example 2-15 | Example 80 | -20 | - | 2,000~7,00 0 | 2,712 | -20 | - | 311 | 1,200 |
| Experimen tal Example 2-16 | Example 83 | 45 | 45 | 2,000~5,00 0 | 2,712 | 45 | 45 | 572 | 1,400 |
| Experimen tal Example 2-17 | Example 83 | -7 | - | 2,000~7,00 0 | 2,311 | -7 | - | 320 | 1,400 |
| Experimen tal Example 2-18 | Example 83 | -20 | - | 2,000~7,00 0 | 2,712 | -20 | - | 311 | 1,400 |
| Experimen tal Example 2-19 | Comparati ve Example 1 | 45 | 45 | 3,000~7,00 0 | 2,712 | 45 | 45 | 572 | 1,050 |
| Experimen tal Example 2-20 | Comparati ve Example 1 | -7 | - | 2,000~6,00 0 | 2,311 | -7 | - | 320 | 1,050 |
| Experimen tal Example 2-21 | Comparati ve Example 1 | -20 | - | 2000~4,00 0 | 2,712 | -20 | - | 311 | 1,050 |
| Experimen tal Example 2-22 | Comparati ve Example 2 | 45 | 45 | 3,000~7,00 0 | 2,712 | 45 | 45 | 572 | 1,400 |
| Experimen tal Example 2-23 | Comparati ve Example 2 | -7 | - | 2,000~6,00 0 | 2,311 | -7 | - | 320 | 1,400 |
| Experimen tal Example 2-24 | Comparati ve Example 2 | -20 | - | 2000~4,00 0 | 2,712 | -20 | - | 311 | 1,400 |
| Experimental Example 2-25 | Comparative Example 3 | 45 | 45 | 3,000~7,000 | 2,712 | 45 | 45 | 572 | 1,400 |
| Experimen tal Example 2-26 | Comparati ve Example 3 | -7 | - | 2,000~6,00 0 | 2,311 | -7 | - | 320 | 1,400 |
| Experimen tal Example 2-27 | Comparati ve Example 3 | -20 | - | 2000~4,00 0 | 2,712 | -20 | - | 311 | 1,400 |

(continued)

| Item | Refrigerant combination | Outside air temperature (°C) | Outside air relative humidity (%) | Compressor rotation speed (RPM) | Outside air volume (m²/hr) | HVAC temperature (°C) | HVAC relative humidity (%) | HVAC air volume (m²/hr) | Refrigerant filling amount (g) |
|---|---|---|---|---|---|---|---|---|---|
| Experimental Example 2-28 | Comparative Example 4 | 45 | 45 | 3,000~7,000 | 2,712 | 45 | 45 | 572 | 1,400 |
| Experimental Example 2-29 | Comparative Example 4 | -7 | - | 2,000~6,000 | 2,311 | -7 | - | 320 | 1,400 |
| Experimental Example 2-30 | Comparative Example 4 | -20 | - | 2000~4,000 | 2,712 | -20 | - | 311 | 1,400 |
| Experimental Example 2-31 | Comparative Example 5 | 45 | 45 | 3,000~7,000 | 2,712 | 45 | 45 | 572 | 1,400 |
| Experimental Example 2-32 | Comparative Example 5 | -7 | - | 2,000~6,000 | 2,311 | -7 | - | 320 | 1,400 |
| Experimental Example 2-33 | Comparative Example 5 | -20 | - | 2,000~4,000 | 2,712 | -20 | - | 311 | 1,400 |

[TABLE 12]

| Item | Cooling evaluation (outside air temperature: 45 °C) |
| --- | --- |
| | Cooling performance (kW) |
| Experimental Example 2-1 (Example 52) | 6.75 |
| Experimental Example 2-4 (Example 74) | 7.01 |
| Experimental Example 2-7 (Example 76) | 7.24 |
| Experimental Example 2-16 (Example 83) | 6.77 |
| Experimental Example 2-19 (Comparative Example 1) | 6.62 |

[TABLE 13]

| Item | Cooling evaluation (outside air temperature: 45 °C) | | | |
| --- | --- | --- | --- | --- |
| | Cooling performance (kW) | Power consumption (kW) | Coefficient of performance | Discharge temperature (°C) |
| Experimental Example 2-7 (Example 76) | 6.09 | 3.2 | 1.88 | 27.2 |
| Experimental Example 2-10 (Example 78) | 6.32 | 3.7 | 1.7 | 26.9 |
| Experimental Example 2-13 (Example 80) | 6.82 | 3.5 | 1.95 | 26.7 |
| Experimental Example 2-19 (Comparative Example 1) | 5.74 | 3.6 | 1.61 | 28.6 |

In the experimental examples, in which R-744, R-13I1 and R-152a were used as the mixed refrigerants, a refrigerant combination according to the examples in which a sum of contents of R-13I1 and R-152a is 60 wt.% or more was used, and POE was used as the oil, the cooling performance in the cooling evaluation (outside air temperature: 45 °C) was 6.75 or higher.

In experimental examples, in which R-744, R-13I1 and R-152a were used as the mixed refrigerants, a refrigerant combination according to the examples in which a sum of contents of R-13I1 and R-152a is 60 wt.% or more was used, and RB 100EV (ENEOS) was used as the oil, the cooling performance and coefficient of performance in the cooling evaluation (outside air temperature: 45 °C) were 6.09 and 1.7 or more, respectively.

In the experimental example, in which the refrigerant according to Comparative Example 1 using R-1234yf alone was used as the mixed refrigerant, and POE was used as the oil, the cooling performance in the cooling evaluation (outside air temperature: 45 °C) was reduced.

In the experimental example, in which the refrigerant according to Comparative Example 1 using R-1234yf alone was used as the mixed refrigerant, and RB 100EV (ENEOS) was used as the oil, the cooling performance and coefficient of performance in the cooling evaluation (outside air temperature: 45 °C) were reduced.

[TABLE 14]

| Item | Heating evaluation (outside air temperature: -7 °C) | |
| --- | --- | --- |
| | Heating performance (kW) | Discharge temperature (°C) |
| Experimental Example 2-5 (Example 74) | 3.15 | 20.2 |
| Experimental Example 2-8 (Example 76) | 3.54 | 24.3 |
| Experimental Example 2-14 (Example 83) | 4.01 | 27 |
| Experimental Example 2-20 (Comparative Example 1) | 2.97 | 17.6 |

[TABLE 15]

| Item | Heating evaluation (outside air temperature: -7 °C) | | | |
|---|---|---|---|---|
| | Heating performance (kW) | Power consumption (kW) | Coefficient of performance | Discharge temperature (°C) |
| Experimental Example 2-8 (Example 76) | 4.01 | 1.84 | 2.18 | 24.3 |
| Experimental Example 2-11 (Example 78) | 4.23 | 2.21 | 1.92 | 28.7 |
| Experimental Example 2-14 (Example 80) | 4.05 | 1.85 | 2.19 | 27.19 |
| Experimental Example 2-20 (Comparative Example 1) | 3.25 | 1.29 | 2.53 | 20.1 |

In the experimental examples, in which R-744, R-13I1 and R-152a were used as the mixed refrigerants, a refrigerant combination according to the examples in which a sum of contents of R-13I1 and R-152a is 60 wt.% or more was used, and POE was used as the oil, the heating performance in the heating evaluation (outside air temperature: -7 °C) was 3.15 kW or more, and the discharge temperature was 20.2 °C or higher.

In experimental examples, in which R-744, R-13I1 and R-152a were used as the mixed refrigerants, a refrigerant combination according to the examples in which a sum of contents of R-13I1 and R-152a is 60 wt.% or more was used, and RB 100EV (ENEOS) was used as the oil, the heating performance in the heating evaluation (outside air temperature: - 7 °C) was 4.01 kW or more, and the discharge temperature was 24.3 °C or higher.

In the experimental example, in which the refrigerant according to Comparative Example 1 using R-1234yf alone was used as the mixed refrigerant, and POE was used as the oil, the heating performance in the heating evaluation (outside air temperature: -7 °C) was 2.97 kW, and the discharge temperature was 17.6 °C.

In the experimental example, in which the refrigerant according to Comparative Example 1 using R-1234yf alone was used as the mixed refrigerant, and RB 100EV (ENEOS) was used as the oil, the heating performance in the heating evaluation (outside air temperature: -7 °C) was 3.25 kW, and the discharge temperature was 20.1 °C.

[TABLE 16]

| Item | Heating evaluation (outside air temperature: -20 °C) | |
|---|---|---|
| | Heating performance (kW) | Discharge temperature (°C) |
| Experimental Example 2-3 (Example 52) | 2.49 | 4.9 |
| Experimental Example 2-6 (Example 74) | 3.06 | 9.7 |
| Experimental Example 2-9 (Example 76) | 2.67 | 3.6 |
| Experimental Example 2-18 (Example 83) | 2.96 | 5.1 |
| Experimental Example 2-21 (Comparative Example 1) | 1.91 | -4.4 |

[TABLE 17]

| Item | Heating evaluation (outside air temperature: -20 °C) | | | |
|---|---|---|---|---|
| | Heating performance (kW) | Power consumption (kW) | Coefficient of performance | Discharge temperature (°C) |
| Experimental Example 2-9 (Example 76) | 2.57 | 0.99 | 2.59 | -1 |
| Experimental Example 2-12 (Example 78) | 2.63 | 1.11 | 2.37 | 0.25 |

(continued)

| Item | Heating evaluation (outside air temperature: -20 °C) | | | |
|---|---|---|---|---|
| | Heating performance (kW) | Power consumption (kW) | Coefficient of performance | Discharge temperature (°C) |
| Experimental Example 2-15 (Example 80) | 2.83 | 1.01 | 2.81 | 3.05 |
| Experimental Example 2-21 (Comparative Example 1) | 2.2 | 0.71 | 3.08 | -3 |

In the experimental examples, in which R-744, R-13I1 and R-152a were used as the mixed refrigerants, a refrigerant combination according to the examples in which a sum of contents of R-13I1 and R-152a is 60 wt.% or more was used, and POE was used as the oil, the heating performance in the heating evaluation (outside air temperature: -20 °C) was 2.49 kW or more, and the discharge temperature was 3.6 °C or higher.

In Experimental Examples 2-6, 2-9 and 2-18 using a refrigerant combination of examples in which the content of R-744 based on the total weight of the mixed refrigerant is increased to 4 wt.% or more, the heating performance was relatively increased compared to Experimental Example 2-3 using a refrigerant combination of examples in which the content of R-744 based on the total weight of the mixed refrigerant is included in 3 wt.%.

In the experimental examples, in which R-744, R-13I1 and R-152a were used as the mixed refrigerants, a refrigerant combination according to the examples in which a sum of contents of R-13I1 and R-152a is 60 wt.% or more was used, and RB 100EV (ENEOS Co., Ltd.) was used as the oil, the heating performance in the heating evaluation (outside air temperature: -20 °C) was 2.57 kW or more, and the discharge temperature was -1 °C or higher.

In the experimental example, in which the refrigerant according to Comparative Example 1 using R-1234yf alone was used as the mixed refrigerant, and POE was used as the oil, the heating performance in the heating evaluation (outside air temperature: -20 °C) was reduced, and the discharge temperature was decreased.

In the experimental example, in which the refrigerant according to Comparative Example 1 using R-1234yf alone was used as the mixed refrigerant, and RB 100EV (ENEOS) was used as the oil, the heating performance in the heating evaluation (outside air temperature: -20 °C) was reduced, and the discharge temperature was decreased.

**Claims**

1. A mixed refrigerant composition comprising carbon dioxide (R-744), trifluoroiodomethane (R-13I1), and 1,1-difluoroethane (R-152a),
   wherein a sum of a content of the trifluoroiodomethane (R-13I1) and a content of the 1,1-difluoroethane (R-152a) based on a total weight of the mixed refrigerant composition is 60% by weight or more and less than 100% by weight.

2. The mixed refrigerant composition according to claim 1, wherein a sum of a content of the trifluoroiodomethane (R-13I1) and a content of the 1,1-difluoroethane (R-152a) based on a total weight of the mixed refrigerant composition is 60 to 98 % by weight, or 85 to 98 % by weight.

3. The mixed refrigerant composition according to claim 1 or 2, wherein the content of the carbon dioxide (R-744) based on the total weight of the mixed refrigerant composition is greater than 0% by weight and 40% by weight or less, or 0.5 % by weight or more and less than 20 % by weight, or 0.5 to 10 % by weight, or 0.5 to 5 % by weight.

4. The mixed refrigerant composition according to any one of claims 1 to 3, wherein the content of the trifluoroiodomethane (R-13I1) based on the total weight of the mixed refrigerant composition is 35 to 80% by weight, or 45 to 74.5 % by weight, or 55 to 71.5 % by weight.

5. The mixed refrigerant composition according to any one claims 1 to 4, wherein the content of the 1,1-difluoroethane (R-152a) based on the total weight of the mixed refrigerant composition is 5 to 60 % by weight, 20 to 60% by weight, or 40 to 60% by weight, or wherein the content of the 1,1-difluoroethane (R-152a) based on the total weight of the mixed refrigerant composition is 30 to 50% by weight, or 20 to 40% by weight.

6. The mixed refrigerant composition according to claims any one of 1 to 5, wherein a ratio of the content of the trifluoroiodomethane (R-13I1) to the content of the carbon dioxide (R-744) based on the total weight of the mixed refrigerant composition is 5 to 80 or 10 to 79; and/or
wherein a ratio of the content of the carbon dioxide (R-744) to the content of the 1,1-difluoroethane (R-152a) based on the total weight of the mixed refrigerant composition is 0.01 to 0.3 or 0.02 to 0.2.

7. The mixed refrigerant composition according to claims any one of 1 to 6, wherein a ratio of the content of the trifluoroiodomethane (R-13I1) to the content of the 1,1-difluoroethane (R-152a) based on the total weight of the mixed refrigerant composition is 0.5 to 4 or 1 to 3.95.

8. The mixed refrigerant composition according to claims any one of 1 to 7, wherein a boiling point of the mixed refrigerant composition at 1 atm is -30°C or lower, preferably -70 to -30 °C, -60 to -34 °C, or -50 to -33 °C.

9. The mixed refrigerant composition according to claims any one of 1 to 8, wherein a critical temperature of the mixed refrigerant composition is 105°C or higher, or 105 to 120 °C or 106 to 120°C.

10. The mixed refrigerant composition according to claims any one of 1 to 9, wherein the critical pressure of the mixed refrigerant composition is 40 to 50 bar or 40 to 48.5 bar.

11. The mixed refrigerant composition according to claims any one of 1 to 10, wherein a temperature glide of the mixed refrigerant composition at a pressure of 1.5 bar is 5 to 40 °C or 5 to 30 °C.

12. The mixed refrigerant composition according to claims any one of 1 to 11, wherein a temperature glide of the mixed refrigerant composition at a pressure of 15 bar is 3 to 30° C or 3 to 25 °C.

13. The mixed refrigerant composition according to claims any one of 1 to 12, wherein a latent heat of the mixed refrigerant composition at -25 °C is 100 to 250 kJ/kg or 150 to 250 kJ/kg.

14. The mixed refrigerant composition according to claims any one of 1 to 13, having one or more of the following characteristics (i) to (iii), respectively alone or in combination:

    (i) a global warming potential (GWP) of the mixed refrigerant composition is 1 to 75 or 20 to 75;
    (ii) an ozone depleting potential (ODP) of 0, and/or
    (iii) a flammability of Class A2L or lower in the refrigerant safety group classification of The American Society of Heating, Refrigerating and Air-Conditioning Engineers (ASHRAE).

15. A heat pump comprising the mixed refrigerant composition of claims of 1 to 14.

[FIG. 1]

[FIG. 2]

Europäisches
Patentamt

European
Patent Office

Office européen
des brevets

# EUROPEAN SEARCH REPORT

Application Number

EP 24 17 3583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 317 574 B (GREE ELECTRIC APPLIANCES INC ZHUHAI) 9 October 2020 (2020-10-09)<br>* paragraph [0001] *<br>* comparative example 2 *<br>----- | 1-15 | INV.<br>C09K5/04 |
| X | US 2007/210276 A1 (LULY MATTHEW H [US] ET AL) 13 September 2007 (2007-09-13)<br>* paragraphs [0010], [0018] *<br>* claims *<br>----- | 1-15 | |

TECHNICAL FIELDS
SEARCHED        (IPC)

C09K

The present search report has been drawn up for all claims

| Place of search | Date of completion of the search | Examiner |
|---|---|---|
| The Hague | 4 September 2024 | Puetz, Christine |

EPO FORM 1503 03.82 (P04C01)

## ANNEX TO THE EUROPEAN SEARCH REPORT
## ON EUROPEAN PATENT APPLICATION NO.

EP 24 17 3583

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2024

| Patent document cited in search report | | Publication date | Patent family member(s) | | Publication date |
|---|---|---|---|---|---|
| CN 110317574 | B | 09-10-2020 | NONE | | |
| US 2007210276 | A1 | 13-09-2007 | CN | 101054336 A | 17-10-2007 |
| | | | EP | 1832640 A1 | 12-09-2007 |
| | | | JP | 2007310868 A | 29-11-2007 |
| | | | US | 2007210276 A1 | 13-09-2007 |
| | | | US | 2010155652 A1 | 24-06-2010 |

EPO FORM P0459

For more details about this annex : see Official Journal of the European Patent Office, No. 12/82